# EUROPEAN PATENT APPLICATION

(11) **EP 1 878 703 A1**
(43) Date of publication of application: **16.01.2008**
(21) Application number: 07252701.3
(22) Date of filing: 05.07.2007
(51) Int. Cl.: C02F 1/28, C02F 101/10

(54) **Method and composition for removing contaminants from an aqueous solution**

(30) Priority: 13.07.2006 US 830592 P; 04.06.2007 US 809941
(71) Applicant: Rohm and Haas Company, Philadelphia, PA 19106-2399 (US)
(72) Inventor: Banavali, Rajiv Manohar, Rydal Pennsylvania 19046 (US); Trejo, Jose Antonio, Lansdale Pennsylvania 19446 (US)
(74) Representative: Buckley, Guy Julian

(57) **Abstract**

A method of removing contaminants from an aqueous solution comprising contacting the aqueous solution with limestone particles coated with iron oxyhydroxide and adsorbing the contaminants from the aqueous solution onto the particle

## Description

This application claims the benefit of priority under 35 U.S.C. § 119(e) of U.S. Provisional Patent Application No. 60/830,592, filed on July 13, 2006, the disclosure of which is incorporated herein by reference.

The invention relates to methods and compositions for removing contaminants from an aqueous solution.

Groundwater contamination, and in particular, of arsenic ("As"), is a problem faced throughout the world. In some countries, an acceptable level of arsenic in water is 50 µg/L, while in the United States, the drinking water standard is a maximum of 10 µg/L.

Due to the concern of contaminants in water and other aqueous solutions, many methods to remove contaminants from these solutions have been developed. Common technologies include chemical coagulation/precipitation processes, membrane separation processes, and adsorptive processes. An example of an adsorptive process is found in U.S. Publication No. 20040262225, which discloses a method using akaganeite, an iron oxyhydroxide, as an ion adsorption medium for removal of arsenic from water and affixing it onto a carrier media for use in filtration systems. The art discloses that the concentration of akaganeite is between 1.2-1.7 weight %, the limestone particles are of 425-2000 micron size and the limestone contains about 20-25 weight % acid-soluble solids.

Although the art discloses the removal of contaminants from water using iron oxyhydroxide as an ion adsorption media the art does not solve the problems associated with the use of iron oxyhydroxide alone. Iron ("Fe") oxides provide a high capacity for contaminant removal, and in particular, arsenic removal, but, alone, require high surface area in order to be effective.

The present invention solves this problem by providing a combination of limestone coated with at least one iron oxyhydroxide. This combination provides a higher capacity for removal of contaminants without the problems associated with limestone alone. Furthermore, the combination provides for a more efficient use of the iron per mass of media as compared to commercial iron oxyhydroxide alone. For example, at high flow rate conditions the measured breakthrough capacity, 10 ppb of arsenic in the effluent water, is higher for the limestone-iron coated material of the present invention having an iron content of 2-30% than the measured breakthrough capacity for the commercial iron oxide having an iron content of 65% alone as disclosed in the art.

Arsenic and other contaminants are typically adsorbed onto substrates that have a contaminant binding capacity that is pH sensitive. One such substrate is limestone.

As used herein, the term "limestone" indicates calcium carbonate (CaCO₃) based inorganic materials. By calcium carbonate based inorganic materials is meant, materials having at least 50 % of CaCO₃ by weight and most preferably comprising from 85% to 97% of CaCO₃ by weight. Such materials include but are not limited to aragonite, vaterite, marble, dolomite, and limestone. Furthermore, limestone may contain variable amounts of quartz comprising silica, clay, silt and sand as disseminations, nodules, or layers within the rock. Impurities, such as sand, organic remains, and other materials are sometimes present in limestone. Limestone may be crystalline, clastic, granular, or massive, depending on the method of formation. Crystals of calcite, quartz, dolomite or barite may line small cavities in the rock. Limestone powder is typically from 10 to 100 microns in size and limestone chips may be of many different sizes that are larger than the powder. The composition of limestone is determined by a ratio of calcite to quartz.

As used herein, the term "media" is defined as limestone, uncoated or coated, activated carbon, coated or uncoated, and combinations thereof.

As used herein, the term "hydrous oxide" is synonymous with "oxyhydroxide" and is defined as insoluble compounds in water, formed by the precipitation of a metal cation with a pH increase in the original solution. By very insoluble in water is meant a material having a solubility constant at pH 7-8 of 10⁻¹³-10^{-14.3} as defined in Millero, F.,"Solubility of Fe(III) in seawater". Earth and Planetary Science Letters 154 (1998) 323-329. The hydrous oxide may be essentially oxides or hydroxides of a single metal or of a mixture of two or more metals. The metallic hydrous oxides can exist as negatively, neutral or positively charged. The structure of the metallic hydrous oxides can be amorphous or crystalline. Examples of metals of the present invention include but are not limited to iron, aluminum, lanthanum, titanium, zirconium, zinc and manganese.

As used herein, the term "amorphous iron oxy(hydroxide)" indicates hydrous oxide particles with less than 10 nm in size as calculated by X-ray diffraction (XRD) analysis with Scherrer equation.

As used herein, iron oxides and iron oxyhydroxides will be represented by the general formula FeOOH. Examples of iron oxides useful in the present invention include, but are not limited to, amorphous iron oxide and crystalline forms such as goethite, lepidocrocite, schwertmannite, feroxhyte, ferrihydrite, hematite, magnetite, maghemite, wustite, bernalite and green rusts.
One aspect of the present invention provides a method of removing contaminants from an aqueous solution comprising:
contacting an aqueous solution comprising at least one contaminant with media wherein the media comprises limestone particles having a surface and a particle size of 76-500 microns; wherein each limestone particle comprises
   (i) a coating of an iron oxyhydroxide on at least a portion of the surface of the particle and;
   (ii) an iron content of 2 to 30 weight %, based on the weight of the particle; and
adsorbing at least a portion of the contaminants from the aqueous solution onto the particles

Another aspect of the present invention a composition that removes contaminants from an aqueous solution comprising media wherein the media comprises limestone particles, having a particle size of 76-500 microns, wherein the particles are at least partially coated with an iron oxyhydroxide and further wherein the particles comprise an iron content of 2-30 weight %, based on a weight of the particleThe composition of the invention comprises iron-coated limestone particles, which are at least partially coated with iron oxyhyroxide. "At least partially coated" means at least 25%, preferably, 50%, and most preferably, 75% of the surface of the limestone is covered by the iron oxyhydroxide coating.

The limestone particles, preferably, comprise at least 30 weight %, based on the weight of the limestone, acid-soluble solids with a more preferred content of at least 50 weight % acid-soluble solids, and a most preferred content of at least 60 weight % acid-soluble solids. The acid-soluble solids as defined in the present invention are CaCO₃ materials. The remainder of the limestone particles is preferably comprised of quartz and other minerals.

The iron-coated limestone particles may comprise iron-coated limestone powder and/or chips of a size of at least 76 microns. The chips are of irregular forms and different sizes, such that the composition may contain different sizes of limestone chips of different shapes.

The amount of Fe on the iron-coated limestone particles is in the range 2-30 weight %, and preferably, in the range of 12-30 weight %, based on the weight of the particle

The average thickness as measured by microscopy counting from the surface of the limestone to the end of the layer of iron oxide(s) is 5-50 microns, and preferably, 10-40 microns. The coverage of the limestone can be complete or partial.

The iron-coated limestone particles, preferably, have a surface area of 20-49 m²/g, pore volume of 0.02-5 cm³/g and pore size of 20-50 Angstroms as measured by Brunauer, Emmett and Teller (BET) porosimetry technique

The coating of iron oxyhydroxide on the limestone particles is formed by adding a ferric (iron) source, such as a ferric salt solution, including but not limited to a ferric chloride solution and a ferric sulfate solution, to a reactor with the limestone particles and an aqueous solution, most preferably water. The concentration of the metal salt in solution is between 5 - 45% w/w and most preferably between 20-35% w/w.

A base is added to neutralize to a pH > 3 most preferably between pH 5-7. The bases useful in the present invention include but are not limited to NaOH, KOH, NaHCO₃, Na₂CO₃, MgOH, Ca(OH)₂ or limestone. The excess liquid is then removed and the iron-coated limestone particles are washed and dried preferably to achieve a moisture content between 1-80% and most preferably 10-30%.

The composition of the present invention may also contain activated carbon, a carbon material mostly derived from charcoal or cellulose-containing materials such as coconut shells. Activated carbon adds additional capabilities, such as adsorption of organics and a wider range of contaminants. It also serves as a substrate for iron oxyhydroxides. In the present invention, iron oxyhydroxides may also be precipitated within the structures of both limestone and activated carbon.

The method of the invention removes contaminants from aqueous solutions, such as water, water-based liquids, and other liquids. The contaminants that may be removed but not limited to those in this list include: arsenic, nitrate, silica, perchlorate, phosphate, chloride, fluoride, copper, uranium, manganese, mercury, and nickel, chromium, selenium, cadmium, iron, zinc, cobalt, lead, aluminum, barium, bismuth, antimony, chromate and cyanide.

The method is particularly applicable to the removal of arsenic from water.

One example of a contaminant that is removed by the method of the present invention is arsenic. In water, arsenic is present mainly in two oxidation states: arsenate, which is represented by As(V), and arsenite, which is represented by As(III). The arsenate structure at low pH in water is H₃AsO₄ and the arsenite structure is H₃AsO₃. The arsenate is most prevalent in oxygenated waters (surface waters). The concentration range of As in water generally is between parts per million ("ppm") and low parts per billion ("ppb").

The speciation of arsenic in water, among other variables, is defined by the equilibrium constants of dissociation ("pKa"), redox potential and oxygen concentration. The equilibrium constants are:
HAsO₂ As(III) pKa1= 9.20 (Note "As(III)" may also be represented by "As(OH)₃")
H₃AsO₄ As(V) pKa1= 2.19, pKa2= 6.94, pKa3= 11.5

In limestone, a wide variety of calcium/arsenic mineral formation is possible, including: Ca₃(AsO₄)₂ and Ca₃(AsO₄)₂ · x H₂O, Ca₅ (AsO₄)₃OH, and Ca₄ (OH)₂(AsO₄)₂ ·4 H₂O. The arsenate anion is particularly attracted to limestone surfaces because of the net positive surface charge of the limestone. The removal of arsenic by calcium arsenate formation and precipitation, and the subsequent stability of the waste product, is facilitated by the alkaline surface pH value of the limestone (pH = 8.5 -10).

The efficacy of limestone to adsorb arsenite is very limited and a coating of iron oxyhydroxide enhances the adsorption capacity. In the present invention, there is a total arsenic, both arsenate and arsenite, removal capacity of at least 0.3 mg arsenic, or other contaminants, per gram of media, where the media includes at least iron-coated limestone particles. As a result, at least 50 µg of contaminant, including arsenic, and preferably at least 10 µg of contaminant, per liter of aqueous solution is removed from the contaminated aqueous solution. Additionally, 0.1 to 15 mg As per gram of media is absorbed onto the particles. Although, the contaminant specifically described is As, these levels of removal are comparable for any contaminant of the present invention.

The following examples are presented to illustrate the method and composition of the invention. These examples are intended to aid those skilled in the art in understanding the present invention. The present invention is, however, in no way limited thereby.

### TEST METHODS

### Scanning Electron Microscopy ("SEM")

To provide a conductive coating for SEM imaging, samples were either sputter-coated with a gold/palladium alloy or, alternatively, a carbon coating was evaporated onto the samples. The sputter-coated samples were primarily used for imaging and the carbon-coated samples were primarily used for elemental analysis. Images of iron-coated limestone in a dry state were taken with both a JEOL 840 SEM and a JEOL 6700 FESEM ("field emission scanning electron microscope"), both available from JEOL USA, Peabody, Massachusetts, with an accelerating voltage of between 10 and 20keV. Images from the JEOL 840 were taken using PGT Imix-PC software, available from Princeton Gamma-Tech Instruments, Inc., Princeton, NJ, and images from the JEOL 6700 were taken with JEOL's PC-SEM software. Energy dispersive x-ray spectroscopy ("EDS" or "EDX") spectra and elemental maps were taken with a PGT detector, using PGT Imix-PC software. Magnifications of between 100x and 300x were used for images intended for measurement of the coating thickness. Spatial calibrations and coating thickness measurements were generated with Image-Pro Plus^{™} image analysis software from Media Cybernetics, Silver Spring, Maryland. Selected limestone and charcoal particles were cut in half with a scalpel and the resulting cut surfaces were oriented as close as possible to perpendicular to the electron beam in order to examine the penetration of iron by EDS.

### X-Ray Fluorescence ("XRF")

The limestone samples were analyzed using a Philips/PANalytical PW2404 Wavelength Dispersive X-Ray Fluorescence Spectrometer from PANalytical, Almelo, The Netherlands. The samples were dried overnight at 110 °C. Approximately 1 - 1.5 g of each sample was weighed in a XRF sample cup with polypropylene film and analyzed under helium. The results were calculated using a Uniquant software package from Omega Data Systems bv, Neptunus 2 NL-5505 NH Veldhoven, The Netherlands, which is a standardless quantitation package. Results were calculated assuming the elements were present in their oxide form except Ca, which is assumed to be CaCO₃. The sample is also assumed to be all inorganic. In XRF, an x-ray beam is focused on the sample, which displaces inner shell electrons; outer shell electrons replace the inner shell electrons and emit light during this process (or fluorescence) which is equal to the energy difference between them. The wavelength of light emitted is unique to each element and the intensity of the light emitted is proportional to the concentration of the element. Wavelength Dispersive XRF spectrometers use diffraction crystals to separate the various wavelengths of light emitted.

### As (Arsenic) capacity

Arsenic was measured by using a Hach Arsenic EZ test kit available from Hach Company, Loveland, Colorado. Arsenic levels were measured in ppb (micrograms per liter of solution). The measurements used were: 0, 10, 25, 50, 100, 250, 500 ppb.
Inductively Coupled Plasma Mass Spectrometry ("ICP") is a type of mass spectrometry that is highly sensitive and capable of the determination of a range of metals and several non-metals at concentrations below one part in 10¹². The ICP spectrometer used in this work is the Agilent ICP-MS 7500. The lower limit of detection is 0.1 ppb of arsenic.

### EXAMPLES

### Example 1: Process for coating limestone particles.

Charge 400 ml of limestone particles of 212-425 micron size range to the reactor. Charge 400 ml of deionized water. Gradually add 800 ml of ferric chloride solution (40% w/v) over 20 minutes. React for 35 minutes at room temperature. Gradually add 1500 ml of NaHCO₃ (8% w/w) over 15 minutes. Add 400 ml of NaOH 15% w/w in 5 minutes and stir the lot for 10 minutes. Maintain the pH in the range 3-8 after 60 minutes after the caustic soda addition. Water wash is done with 5 liters of water until the effluent is clear. The final pH was 7.2. The lot was Buchner drained and packed. A sample was oven dried at 110C for 48 hours, acid digested and iron was measured by ICP. Percentage (%) of Fe was- 19 % and a BET surface area of 38 m²/g.

### Example 2: Process for coating limestone particles

Charge 400 ml of limestone particles of 500-1000 micron size range to the reactor. Charge 400 ml of deionized water. Gradually add 800 ml of ferric chloride solution (40% w/v) over 20 minutes. React for 35 minutes at room temperature. Gradually add 1500 ml of NaHCO₃ (8% w/w) over 15 minutes. Add 400 ml of NaOH 15% w/w in 5 minutes and stir the lot for 10 minutes. Maintain the pH in the range 3-8 after 60 minutes after the caustic soda addition. Water wash is done with 5 liters of water until the effluent is clear. The final pH was 7.2. The lot was Buchner drained and packed. A sample was oven dried at 110C for 48 hours, acid digested and iron was measured by ICP. Percentage (%) of Fe was- 17 % and a BET surface area of 34 m²/g.

### Example 3: Process for coating limestone particles

Charge 100 ml of limestone particles of 106-425 micron size to the reactor. Charge 100 ml of deionized water. Gradually add 200 ml of ferric chloride solution (40% w/w) over 20 minutes. React for 25 minutes at room temperature. Gradually add 300 ml of NaHCO₃ over 15 minutes. Maintain the pH in the range 5-8. Let the reaction proceed until the final pH is in the range 5-8 after 60 minutes. Drain the excess liquid and water wash the material with excess water until the effluent is clear. XRF results: Percentage (%) of Fe - 7 and CaCO₃ - 83%. BET surface area of 29 m²/g.

### Example 4: Process for coating limestone particles in 106-212 micron particle size range.

Same as Example 1, except 100 ml of limestone particles in 106-212 micron particle size range are used. XRF results: Percentage %- Fe was 7.4 and Percentage CaCO₃ was 82. BET surface area of 34 m²/g.

### Example 5. Process for coating limestone particles in the 76-106 micron particle size range

Charge 300 g of limestone with a particle size range of 76-106 microns and 300 g of deionized water to the reactor. Agitate for 2 minutes. Charge 300 ml of ferric chloride solution (40% w/w) drop wise with good agitation and degassing. The pH during the addition of all of the ferric chloride solution is monitored and maintained at a pH range of 2-6. The total addition time 20-30 minutes. Continue the agitation for 30 minutes. Add 700 ml of NaHCO₃ (8% w/w). Let the reaction proceed for 60 minutes. Stop the agitation and let the limestone particles form sediment. Siphon out the top layer of water with ferric (iron) particles. Add 500 ml of water and agitate again. Let the sedimentation proceed and after 30 minutes, siphon out the top layer. Repeat this last step 10 times. Transfer the lot to a separation funnel. After the lot has been transferred to the funnel, let the sedimentation proceed for 15 minutes. Drain the funnel so that ¾ of the lot has been added to a drying tray. Dry the powder in the tray for 72 hours under air current at room temperature. XRF results: %- Fe - 7.4 and CaCO₃ % - 61.6. BET surface area of 31 m²/g.

### Example 6. Process for coating activated carbon iron hydrous oxide media (12 x 30 mesh)

283 g of Activated Carbon from Sutcliffe Speakman Grade 208C 12 x 30 US mesh were charged to the reactor. 630 g of Ferric chloride (40% w/w) solution was charged to the reactor. The lot was under agitation for 3 hours. The excess liquid was siphoned out. 0.7 liter of 15% w/w NaOH were charged in 2 minutes to the reactor. The pH was 6.6 after 90 minutes. The liquid was siphoned out of the reactor. 0.5 liters of a solution containing NaHCO₃ (8% w/w) were charged in 15 minutes to the reactor. After 90 minutes the excess liquid was siphoned out and the lot was washed with 5 liters deionized water until the color of the effluent was clear. By ICP the %-Fe measured was 6.

### Example 7. Arsenic removal capacity - Equilibrium Testing

The equilibrium test to measure the arsenic capacity of the media is done under the following conditions: A solution of 100 ml of water containing 170 ppm of Arsenic is placed in a bottle, where 0.5 g of iron coated limestone (Example 1) and placed in a shaker at room temperature for 4 days. A sample with untreated limestone and a blank sample with not media were also used. The arsenic was measured at time zero and at the end of the 4 days by ICP.

**Table 2:**

| Sample | Particle Size Range (microns) | mg media in test | Initial As concentration (ppm) | Final As concentration (ppm) | Final pH | As capacity (mg As/g media) |
|---|---|---|---|---|---|---|
| Example 1 | 212-500 | 0.5 | 172 | 96 | 8.13 | 15.2 |
| Untreated Limestone | 212-500 | 0.5 | 172 | 171 | 8.15 | 0.2 |

### Example 8. Equilibrium Testing of Arsenic removal capacity at different pH

The iron coated limestone used herein is described in Example 4. The equilibrium test to measure the arsenic capacity of the media is done under the following conditions: A solution of 80 ml of water containing a range from 1 ppm of total arsenic with a ratio of As(III) / As(V) = 1.0 is placed in a bottle. The pH is adjusted with NaOH to pH of 7.7 and 9.1. A defined amount of iron coated limestone is added to the flask. The bottle is then sealed and equilibrated for 2 days. The liquid is filtered through 0.45 micron screens. To measure the arsenic concentration in the liquid, 50 ml are used in the Hach Arsenic EZ test ^{™}. The test is run for 60 minutes to guarantee an accurate measurement. The result is compared to the colorimetric standards and the data registered and used to calculate the arsenic capacity in mg As / g of media.
At pH 9 the arsenic capacity obtained was: 1.5 mg As/g iron coated limestone.
At pH 7 the arsenic capacity obtained was: 1.5 mg As/g iron coated limestone.

### Example 9. Column testing for arsenic removal

A cartridge was packed with 1 liter of iron coated limestone synthesized according to Example 1. The second layer was 0.5 liter of iron oxide imbibed activated carbon synthesized according to Example 7. 0.5 liter of untreated limestone was used on top of the previous two materials. The column had a 4 inch internal diameter and a height of 15 inches. The column was used in an upflow mode at a flowrate of 150 ml/min. The influent water used had the following composition. Fe(II) 2 ppm, As(V) 150 ppb, As(III) 150 ppb and pH 6.5. Deionized water was used to charge the tank and NaCO₃ salt was used to adjust the pH prior to running the column. The water was collected in a 100 liter tank and the arsenic was measured after each 100 liters. Samples were measured using ICP-MS.

**Table 3.**

| Liters (Accumulated)_ | ICP-MS As (ppb) |
|---|---|
| 100 | 1.0 |
| 200 | 0.6 |
| 300 | 0.5 |
| 400 | 0.6 |
| 500 | 3.0 |
| 700 | 5.0 |
| 800 | 2.0 |
| 1000 | 3.0 |
| 1100 | 8.0 |
| 1300 | 4.0 |
| 1500 | 7.0 |
| 1600 | 4.0 |
| 1700 | 5.0 |
| 1800 | 8.0 |
| 1900 | 6.0 |
| 2000 | 4.0 |
| 2200 | 5.0 |

### Example 10. Arsenic Removal. Column testing

A small column (1.5 cm in diameter by 10 cm in length) with 8 ml of iron coated limestone as described in Example 1. The feed water composition used was: As(V) = 100 ppb, Si = 20 ppm .and pH 7.6. The flow rate used was 1.6 Empty Bead Contact Time (EBCT), Flow rate of 5 ml/min. The water was collected with a fraction collector and each in line sample was measured by ICP-MS for arsenic in the water. The limestone-iron coated was obtained following the procedure explained in example 1. The breakthrough was defined when the concentration of As in the effluent reaches 10 ppb as measured by ICP-MS. The Bed Volumes needed of water to achieve this condition were 6000.
The media could treat: 6 Liters of water / ml of media to 10 ppb breakthrough.

The calculated arsenic capacity using the area under the curve of the breakthrough curve to 10000 BV and arsenic 52 ppb in the effluent was 0.71 mg As/ml of iron coated limestone.

### Comparative Example 1 Arsenic Removal. Column Testing - GFH

A small column (1.5 cm in diameter by 10 cm in length) with 8 ml of commercial ground ferric oxide (Bayoxide E33^{™}) (%-Fe 62 and BET of 132 m2/g). was used to remove arsenic from water. The feed water composition used was: As(V) = 100 ppb, Si = 20 ppm .and pH 7.6. The flow rate used was 1.6 Empty Bead Contact Time (EBCT), Flow rate of 5 ml/min. The water was collected with a fraction collector and each in line sample was measured by ICP-MS for arsenic in the water.
The breakthrough was defined when the concentration of As in the effluent reaches 10 ppb as measured by ICP-MS. The Bed Volumes needed of water to achieve this condition were 2250. The media could treat: 2.25 Liters of water / ml of media to 10 ppb breakthrough.

The calculated arsenic capacity using the area under the curve of the breakthrough curve to 10000 BV and arsenic 45 ppb in the effluent was 0.59 mg As/ml of commercial ground ferric oxide.

### Comparative Example 2. Arsenic Removal. Column Testing - 500 - 1000 micron particle size.

A small column (1.5 cm in diameter by 10 cm in length) with 8 ml of iron coated limestone as described in Example 2. The feed water composition used was: As(V) = 100 ppb, Si = 20 ppm .and pH 7.6. The flow rate used was 1.6 Empty Bead Contact Time (EBCT), Flow rate of 5 ml/min. The water was collected with a fraction collector and each in line sample was measured by ICP-MS for arsenic in the water. The limestone-iron coated was obtained following the procedure explained in example 1. The breakthrough was defined when the concentration of As in the effluent reaches 10 ppb as measured by ICP-MS. The Bed Volumes needed of water to achieve this condition were 3800 BV. The media could treat: 5 Liters of water / ml of media to 10 ppb breakthrough.

### Example 11. Heavy metal removal testing

A 1 inch column was charged with 45 ml of media (35 ml limestone-Fe and 10 ml Carbon-Fe). The influent water was 400 ml at pH 6 which was prepared containing all the metals listed below. The concentration of each metal in the feed water was in the range of 167-323 ppb as measured by ICP. Metal salts ICP standard aqueous solutions in 2% HNO₃ were used as the raw materials for the feed water preparation. The pH was adjusted with NaOH 8% solution to a pH of 6.0 after all the metals were added to the solution. The flow rate used was 5 ml/min. Samples were taken at time zero and final sample. The concentration of each metal was measured in the influent water and bulk sample of the effluent. The results are reported in the following table.

**Table 4.**

| Metal List | Influent | Effluent (final sample) | Calculated Removal capacity | % Removal based upon final sample |
|---|---|---|---|---|
| | | ppb | ug metal / ml media | |
| As | 278 | ND | 2.5 | 100 |
| Cd | 260 | ND | 2.3 | 100 |
| Ni | 234 | ND | 2.1 | 100 |
| Mn | 249 | 2 | 2.2 | 99 |
| Pb | 232 | 1 | 2.1 | 99 |
| Cu | 295 | 14 | 2.5 | 95 |
| Al | 323 | 25 | 2.6 | 92 |
| Ba | 261 | 21 | 2.1 | 92 |
| Cr | 259 | 20 | 2.1 | 92 |
| Hg | 167 | 24 | 1.3 | 85 |
| Sb | 318 | 101 | 1.9 | 68 |

| | | | | |
|---|---|---|---|---|
| Note ND means not detected. | | | | |

### Example 12

The equilibrium test to measure the arsenic capacity of the media is done under the following conditions: A solution of 80 ml of water containing a range from 9-46 ppm of total cation is placed in a bottle, where a defined amount of composite material or untreated limestone was previously weighed. The bottle is then sealed and equilibrated for 2 days. The liquid is filtered through 45 micron screens. Sample is measured by ICP for concentrations.

**Table 2:**

| Sample | Cation in Solution | Initial As concentration (ppm) | Final As concentration (ppm) | Final pH | Capacity: mg metal / g-media |
|---|---|---|---|---|---|
| | | | | | |
| Untreated Limestone | Ni | 10.9 | 0.43 | 7.56 | 2.09 |
| Untreated Limestone | As (III) | 20.4 | 20.3 | 8.10 | < 0.09 |
| Untreated Limestone | As (V) | 46.9 | 46.8 | 7.99 | < 0.01 |
| | | | | | |
| Example 1 | Ni | 10.9 | 0 | 7.06 | > 2.2 |
| Example 1 | As (III) | 20.4 | 0 | 7.05 | > 4.05 |
| Example 1 | As (V) | 46.9 | 4.3 | 7.13 | 8.53 |

## Claims

1. A method of removing contaminants from an aqueous solution comprising:
contacting an aqueous solution comprising at least one contaminant with media wherein the media comprises limestone particles having a surface and a particle size of 76-500 microns; wherein each limestone particle comprises
(i) a coating of an iron oxyhydroxide on at least a portion of the surface of the particle and;
(ii) an iron content of 2 to 30 weight %, based on the weight of the particle; and
adsorbing at least a portion of the contaminants from the aqueous solution onto the particles.

2. The method of claim 1 wherein the adsorbing comprises:
removing at least 10 µg of the contaminant per liter of aqueous solution; and
allowing 0.1 to 15 mg contaminant per gram of media to be adsorbed on the particles.

3. The method of claim 1 wherein the contaminants comprise arsenic.

4. The method of claim 1 further comprising:
contacting the aqueous solution with activated carbon and uncoated limestone particles; and
adsorbing contaminants from the aqueous solution onto the activated carbon and uncoated limestone particles.

5. A composition that removes contaminants from an aqueous solution comprising:
media wherein the media comprises limestone particles, having a particle size of 76-500 microns, wherein the particles are at least partially coated with an iron oxyhydroxide and further wherein the particles comprise an iron content of 2-30 weight %, based on a weight of the particle.

6. The composition of claim 5 wherein the particles comprise a crystallite size of less than 10 nm.

7. The composition of claim 5 wherein the iron oxyhydroxide comprises an average thickness of 5 to 50 microns.

8. The composition of claim 5 wherein the limestone particles comprise at least 30% acid-soluble solids.

9. The composition of claim 5 wherein the composition further comprises:
activated carbon; and
uncoated limestone particles having a particle size of at least 76 microns.
